# EUROPÄISCHE PATENTANMELDUNG

(11) **EP 1 035 739 A2**
(43) Veröffentlichungstag der Anmeldung: **13.09.2000**
(21) Anmeldenummer: 00440056.0
(22) Anmeldetag: 25.02.2000
(51) Int. Cl.: H04Q 3/62, H04Q 11/04, H04M 3/46

(54) **Verfahren zum Abwickeln eines Sammelanrufs**

(30) Priorität: 09.03.1999 DE 19910531
(71) Anmelder: ALCATEL, 75008 Paris (FR)
(72) Erfinder: Matt, Hans Jürgen, Dr., 71686 Remseck (DE); Schneider, Gerhard, 71229 Leonberg (DE)
(74) Vertreter: Dreiss, Fuhlendorf, Steimle & Becker, Patentanwälte

(57) **Zusammenfassung**

Die Erfindung berifft ein Verfahren zum Abwickeln eines Sammelanrufs (1), der auf einem Eingangskanal eines eingangsseitigen Anschlusses (9) einer Telekommunikations (TK)-Einrichtung (8) mit mindestens einem Sammelanschluß (10) ankommt. Um auch solche Sammelanrufe (1) abwickeln zu können, die mehrere Eingangskanäle einer TK-Einrichtung (8) für die Verbindung belegen, schlägt die Erfindung ein durch die nachfolgenden Schritte gekennzeichnetes Verfahren vor:
1.1. Feststellen (2) durch die TK-Einrichtung (8), ob der ankommende Sammelanruf (1) Teil einer mehrkanaligen Telekommunikations (TK)-Verbindung ist;
1.2. falls 1.1. zutrifft, Feststellen durch die TK-Einrichtung (8), ob bereits ein anderer Sammelanruf von demselben Anrufer auf einen Ausgangskanal der TK-Einrichtung (8) geschaltet ist;
1.3. falls 1.1. zutrifft und 1.2. nicht zutrifft, Schalten (5) des Sammelanrufs (1) auf einen von mehreren zusammengehörigen freien Ausgangskanälen der TK-Einrichtung (8) und Reservieren (6) der übrigen zusammengehörigen Ausgangskanäle durch die TK-Einrichtung (8); und
1.4. falls 1.2. zutrifft, Schalten (4) des ankommenden Sammelanrufs (1) auf einen der reservierten Ausgangskanäle durch die TK-Einrichtung (8).

## Beschreibung

Die Erfindung betrifft ein Verfahren zum Abwickeln eines Sammelanrufs, der auf einem Eingangskanal einer Telekommunikations (TK)-Einrichtung mit mindestens einem Sammelanschluß ankommt.

Die Erfindung betrifft außerdem eine Telekommunikations (TK)-Einrichtung mit mindestens einem Sammelanschluß, zum Abwickeln eines Sammelanrufs, der auf einem Eingangskanal der TK-Einrichtung ankommt.

Ein solches Verfahren und eine solche Telekommunikations (TK)-Einrichtung sind aus dem Stand der Technik bekannt. TK-Einrichtungen, die die Möglichkeit haben, Sammelanrufe abzuwickeln, arbeiten bspw. als Telefon-Nebenstellenanlage nach dem Integrated Services Digital Network (ISDN)-Standard. Ein ISDN-Anschluß der TK-Einrichtung arbeitet mit drei Übertragungskanälen, wovon zwei Kanäle (B-Kanäle) für die Übertragung von Daten und Sprache mit einer Übertragungsrate von je 64 kBit/s genutzt werden. Der dritte Kanal (D-Kanal) dient mit einer Übertragungsrate von 16 kBit/s zum Steuern der Kommunikationswege und Verbindungsknoten mit Hilfe von Siganlisierungsinformationen. Der Sammelanschluß der bekannten TK-Einrichtung ist über eine Vielzahl von eingangsseitigen Anschlüssen, z. B. einem Leitungsbündel, unter einer einzigen, sog. Sammelrufnummer, erreichbar. Solche Sammelrufnummern werden vorzugsweise für bestimmte Ansagedienste oder für Notrufleitzentralen verwendet, auf die eine große Zahl wechselnder Teilnehmer aus dem öffentlichen Telekommunikations (TK)-Netzwerk Zugriff haben möchte. Darüber hinaus weist die bekannte TK-Einrichtung u. a. eine oder mehrere Sammelanschlüsse mit einer Vielzahl von ausgangsseitigen Anschlüssen auf, an die jeweils ein Telekommunikations (TK)-Endgerät angeschlossen ist. Jedes dieser TK-Endgeräte erfüllt entweder automatisch (z. B. Zugauskunft) oder über eine Bedienperson (z. B. Kundentelefon) eine prinzipiell gleiche, im Einzelfall inhaltlich jedoch unterschiedliche Aufgabe.

Zum Abwickeln von Sammelanrufen wird ein auf einem B-Kanal eines eingangsseitigen Anschlusses oder auf einem eingangseitigen Leitungsbündel eingehender Anruf von der bekannten TK-Einrichtung auf den ersten freien B-Kanal eines ausgangsseitigen Anschlusses des Sammelanschlusses gelegt. Auf diese Weise wird eine Telekommunikations (TK)-Verbindung zwischen dem TK-Endgerät des Anrufers und dem TK-Endgerät des Angerufenen hergestellt, das an den ersten freien B-Kanal des ausgangsseitigen Anschlusses angeschlossen ist. Dieses bekannte Verfahren zum Abwickeln von Sammelanrufen arbeitet bei TK-Verbindungen, die lediglich einen Kanal für die TK-Verbindung belegen, z. B. bei herkömmlichen Sprach- oder Telefax-TK-Verbindungen, problemlos.

Es gibt jedoch auch (z. B. bei ISDN) TK-Verbindungen, die zwei Eingangskanäle (2 B-Kanäle) eines eingangsseitigen Anschlusses der TK-Einrichtung belegen und auf zwei zusammengehörige Ausgangskanäle eines Anschlusses durchschalten. Die beiden Eingangskanäle werden in dem Endgerät des Angerufenen zu einer TK-Verbindung mit der doppelten Übertragungskapazität zusammengefaßt. Solche TK-Verbindungen sind bspw. Video-TK-Verbindungen. Der Aufbau einer Video-TK-Verbindung zwischen zwei Endgeräten ist in der US 5,539,811 beschrieben. Zum Aufbau der Video-TK-Verbindung werden üblicherweise von dem Endgerät des Anrufers kurz nacheinander zwei Anrufe auf zwei B-Kanäle geschaltet. Ein einzelner Anruf auf einem der B-Kanäle ist lediglich ein Teil der Video-TK-Verbindung. Das Endgerät des Angerufenen erkennt, ob und wie die B-Kanäle einander zugeordnet sind und daß eine Video-TK-Verbindung über zwei einander zugeordnete B-Kanäle aufgebaut werden soll. Diese zwei B-Kanäle werden dann zu einer Video-TK-Verbindung mit doppelter Übertragungskapazität zusammengefaßt. Das in der US 5,539,811 offenbarte Verfahren ist für das Abwickeln von Sammelanrufen jedoch nicht geeignet.

Dagegen können mit dem bekannten Verfahren der eingangs genannten Art keine Video-Sammelanrufe abgewickelt werden. Die zwei Video-Anrufe, die auf zwei B-Kanälen eines eingangsseitigen Anschlusses nacheinander eingehen, werden von der bekannten TK-Einrichtung jeweils auf den ersten freien B-Kanal eines ersten freien ausgangsseitigen Anschlusses gelegt. Das kann dazu führen, daß zwei B-Kanäle eines Video-Anrufs zu zwei verschiedenen Ausgangskanälen der TK-Einrichtung, insbesondere des Sammelanschlusses der TK-Einrichtung, geschaltet werden und der Video-Anruf somit zu zwei verschiedenen TK-Endgeräten des Angerufenen geleitet wird. Eine ordnungsgemäße Video-TK-Verbindung über einen Sammelanschluß der TK-Einrichtung kann somit nicht zustandekommen.

Aus den vorgenannten Nachteilen des Standes der Technik ergibt sich eine Aufgabe der vorliegenden Erfindung, ein Verfahren der eingangs genannten Art dahingehend auszugestalten und weiterzubilden, daß auch solche Sammelanrufe abgewickelt werden können, die mehrere Eingangskanäle von einem oder mehreren eingangsseitigen Anschlüssen einer TK-Einrichtung für eine TK-Verbindung belegen.

Zur Lösung dieser Aufgabe schlägt die Erfindung ausgehend von dem Verfahren der eingangs genannten Art ein Verfahren vor, das gekennzeichnet ist durch die nachfolgenden Schritte:
1.1. Feststellen durch die TK-Einrichtung, ob der ankommende Sammelanruf Teil einer Telekommunikations (TK)-Verbindung ist, die mehrere Eingangskanäle der TK-Einrichtung belegt;
1.2. falls 1.1. zutrifft, Feststellen durch die TK-Einrichtung, ob bereits ein anderer Sammelanruf von demselben Anrufer auf einen Ausgangskanal der TK-Einrichtung geschaltet ist;
1.3. falls 1.1. zutrifft und 1.2. nicht zutrifft, Schalten des Sammelanrufs auf einen von mehreren zusammengehörigen Ausgangskanälen der TK-Einrichtung und Reservieren der übrigen zusammengehörigen Ausgangskanäle durch die TK-Einrichtung; und
1.4. falls 1.2. zutrifft, Schalten des ankommenden Sammelanrufs auf einen der reservierten Ausgangskanäle durch die TK-Einrichtung.

Die TK-Einrichtung weist einen oder mehrere eingangsseitige Anschlüsse mit jeweils einem oder mehreren Eingangskanälen auf. Als sog. S2M-Anschlüsse ausgebildete eingangsseitige Anschlüsse weisen bspw. eine Übertragungskapazität von 2,048 MBit/s auf und verfügen über 15 ISDN-Verbindungsleitungen mit insgesamt 30 Eingangskanälen je Anschluß. Ausgangsseitig weist die TK-Einrichtung einen oder mehrere Sammelanschlüsse auf. Jeder der Sammelanschlüsse weist einen oder mehrere ausgangsseitige Anschlüsse mit jeweils einem oder mehreren Ausgangskanälen auf. Als sog. SO-Anschlüsse ausgebildete ausgangsseitige Anschlüsse weisen bspw. zwei Ausgangskanäle (zwei B-Kanäle einer ISDN-Verbindung) je Anschluß auf. Es sind auch ausgangsseitige Anschlüsse der Sammelanschlüsse denkbar, bei denen jeweils mehrere S0-Anschlüsse zu Gruppenanschlüssen mit jeweils mehreren S0-Anschlüssen zusammengefaßt sind. Die TK-Einrichtung kann außerdem einen oder mehrere herkömmliche Einzelanschlüsse für jeweils einen Telefonkanal aufweisen.

Bei dem erfindungsgemäßen Verfahren erkennt die TK-Einrichtung, ob es sich bei einem ankommenden Anruf um einen Sammelanruf oder um einen Einzelanruf handelt. Abhängig von der Art des ankommenden Anrufs leitet die TK-Einrichtung einen Sammelanruf auf einen der Sammelanschlüsse für gebündelte Kanäle und einen Einzelanruf auf einen der Einzelanschlüsse weiter.

Die TK-Einrichtung überprüft zunächst jeden ankommenden Sammelanruf dahingehend, ob der Sammelanruf Teil einer TK-Verbindung ist, die mehrere Eingangskanäle eines oder mehrerer eingangsseitiger Anschlüsse der TK-Einrichtung belegt. Ist dies nicht der Fall, d. h. falls der Sammelanruf nur einen Eingangskanal belegt, es sich also um einen herkömmlichen Sprach- oder Telefax-Sammelanruf handelt, bedarf es keiner besonderen Abwicklung des ankommenden Anrufs. Ein solcher Sammelanruf kann auf herkömmliche Art und Weise, wie aus dem Stand der Technik bekannt, abgewickelt werden.

Falls der ankommende Sammelanruf jedoch Teil einer mehrkanaligen TK-Verbindung ist, d. h. falls es sich bspw. um einen Video-Sammelanruf handelt, wird, noch bevor der ankommende Sammelanruf auf einen freien Ausgangskanal eines freien ausgangsseitigen Anschlusses geschaltet wird, überprüft, ob bereits ein Sammelanruf von demselben Anrufer auf einen anderen Ausgangskanal eines ausgangsseitigen Anschlusses der TK-Einrichtung geschaltet ist.

Falls kein anderer Sammelanruf von demselben Anrufer auf einen anderen Ausgangskanal der TK-Einrichtung geschaltet ist, wird der ankommende Sammelanruf auf einen von mehreren zusammengehörigen freien Ausgangskanälen geschaltet. Die zusammengehörigen Ausgangskanäle können Teil eines oder mehrerer ausgangsseitiger Anschlüsse sein. Die zusammengehörigen Ausgangskanäle mehrerer ausgangsseitiger Anschlüsse sind vorzugsweise zu einem Gruppenanschluß für n x 2B-Kanäle zusammengefaßt. So bilden bspw. bei sechs zusammengehörigen B-Kanälen einer ISDN-TK-Einrichtung drei S0-Anschlüsse einen mehrkanalfähigen Gruppenanschluß.

Die übrigen der zusammengehörigen Ausgangskanäle werden für erwartete, später ankommende weitere Sammelanrufe der mehrkanaligen TK-Verbindung reserviert. Wenn alle Sammelanrufe der mehrkanaligen TK-Verbindung auf einen der zusammengehörigen Ausgangskanäle geschaltet sind, können die einzelnen Sammelanrufe zu einer TK-Verbindung mit einer gegenüber einzelkanaligen TK-Verbindungen um ein mehrfaches höheren Übertragungskapazität zusammengefaßt werden.

Die reservierten Ausgangskanäle werden gekennzeichnet, damit die entsprechenden weiteren Sammelanrufe der mehrkanaligen TK-Verbindung, die auf weiteren Eingangskanälen bei der TK-Einrichtung ankommen, diesem Ausgangskanal zugeordnet und auf ihn geschaltet werden können. Auf diese Weise kann sichergestellt werden, daß mehrere zusammengehörige Sammelanrufe, die zusammen eine mehrkanalige TK-Verbindung, z. B. eine Video-TK-Verbindung bilden, auch auf mehrere zusammengehörige Ausgangskanäle an dem Sammelanschluß geschaltet werden, so daß sie dann zu einer mehrkanaligen TK-Verbindung mit der gewünschten höheren Übertragungskapazität zusammengefaßt werden können.

Falls bereits ein anderer Sammelanruf von demselben Anrufer auf einen anderen Ausgangskanal der TK-Einrichtung geschaltet ist, wird der ankommende Sammelanruf auf einen der reservierten Ausgangskanäle geschaltet, die zu diesem anderen Ausgangskanal gehören. Die reservierten Ausgangskanäle wurden, wie oben erläutert, entsprechend gekennzeichnet, so daß der ankommende Sammelanruf problemlos einem der reservierten Ausgangskanäle zugeordnet und auf ihn geschaltet werden kann.

Mit dem erfindungsgemäßen Verfahren können nun erstmals auch Sammelanrufe, die mehrere Eingangskanäle der TK-Einrichtung belegen, die dann zu einer TK-Verbindung mit einer höheren Übertragungskapazität zusammengefaßt werden, ordnungsgemäß abgewickelt werden. Dadurch können im Rahmen von Sammelanrufen erstmals auch mehrkanalige TK-Verbindungen hergestellt werden. Das ist insbesondere für neue videobasierte Kommunikationsdienste wie bspw. Video-Auskunfts- und Video-Notruf-Dienste von besonderer Bedeutung; aber auch für andere Datendienste, die Bedarf an einer größeren Datenrate n x 2B haben.

Das erfindungsgemäße Verfahren funktioniert auch dann problemlos, wenn sich der Aufbau von mehrkanaligen TK-Verbindungen von verschiedenen Anrufern überschneidet. Wenn sich bspw. der Aufbau von zweikanaligen TK-Verbindungen von zwei Anrufern überschneidet, wird der erste Sammelanruf des ersten Anrufers auf einen von zwei zusammengehörigen Ausgangskanälen eines ersten ausgangsseitigen Anschlusses geschaltet. Der nachfolgende erste Sammelanruf des zweiten Anrufers wird auf einen von zwei zusammengehörigen Ausgangskanälen eines zweiten ausgangsseitigen Anschlusses geschaltet. Der nachfolgende zweite Sammelanruf des ersten Anrufers wird auf den anderen, reservierten Ausgangskanal des ersten Anschlusses geschaltet. Der nachfolgende zweite Sammelanruf des zweiten Anrufers wird schließlich auf den anderen, reservierten Ausgangskanal des zweiten Anschlusses geschaltet. Auf diese Weise können bspw. zweikanalige Video-TK-Verbindungen zum einen zwischen dem Endgerät des ersten Anrufers und einem ersten Endgerät des Angerufenen, das an den ersten Anschluß angeschlossen ist, und zum anderen zwischen dem Endgerät des zweiten Anrufers und einem zweiten Endgerät des Angerufenen, das an den zweiten Anschluß angeschlossen ist, hergestellt werden.

Es sind auch TK-Einrichtungen denkbar, bei denen jeweils mehrere Sammelanschlüsse zuu Sammelanschluss-Gruppen zusammengefasst sind. Jede Sammelanschlussgruppe weist eine bestimmte Kanalzahl auf. Jeder Sammelanschlussgruppe ist eine eigene Rufnummer zugewiesen. Um eine TK-Verbindung über eine bestimmte Anzahl von Kanälen herzustellen, wählt der Anrufer die Rufnummer der entsprechenden Sammelanschlussgruppe an. Bei dieser Ausführungsform beschränkt sich das Feststellen durch die TK-Einrichtung, ob der ankommende Sammelanruf-Teil einer TK-Verbindung ist, die mehrere Eingangskanäle der TK-Einrichtung belegt, somit auf das Erkennen der angewählten Rufnummer.

Gemäß einer vorteilhaften Weiterbildung der Erfindung wird vorgeschlagen, daß in dem Schritt 1.3. den reservierten Ausgangskanälen die Rufnummer des Anrufers zugeordnet wird und daß in dem Schritt 1.2. festgestellt wird, ob die Rufnummer des Anrufers gleich der Rufnummer ist, die den reservierten Ausgangskanälen zugeordnet ist. Die TK-Einrichtung erhält die Rufnummer des Anrufers im Rahmen eines Anrufs vorzugsweise automatisch über einen entsprechenden Steuerkanal, z. B. den D-Kanal beim ISDN. Über die dem reservierten Ausgangskanal zugeordnete Rufnummer des Anrufers kann ein nachfolgender Sammelanruf dann einem der reservierten Ausgangskanälen zugeordnet und auf diesen geschaltet werden.

Eine weitere Aufgabe der vorliegenden Erfindung besteht darin, eine TK-Einrichtung der eingangs genannten Art dahingehend auszugestalten und weiterzubilden, daß sie auch solche Sammelanrufe abwickeln kann, die mehrere Eingangskanäle von einem oder mehreren eingangsseitigen Anschlüssen der TK-Einrichtung für eine TK-Verbindung belegen.

Für die Lösung dieser Aufgabe schlägt die Erfindung ausgehend von der TK-Einrichtung der eingangs genannte Art vor, daß die TK-Einrichtung aufweist:
3.1. Mittel zum Feststellen, ob der ankommende Sammelanruf Teil einer Telekommunikations (TK)-Verbindung ist, die mehrere Eingangskanäle der TK-Einrichtung belegt;
3.2. Mittel zum Feststellen, ob bereits ein anderer Sammelanruf von demselben Anrufer auf einen Ausgangskanal der TK-Einrichtung geschaltet ist, falls 3.1. zutrifft;
3.3. Mittel zum Schalten des Sammelanrufs auf einen von mehreren zusammengehörigen freien Ausgangskanälen der TK-Einrichtung und Reservieren der übrigen zusammengehörigen Ausgangskanäle, falls 3.1. zutrifft und 3.2. nicht zutrifft;
3.4. Mittel zum Schalten des ankommenden Sammelanrufs auf einen der reservierten Ausgangskanäle, falls 3.2. zutrifft.

Um mehreren nacheinander in der TK-Einrichtung ankommenden Sammelanrufen, die zusammen eine mehrkanalige TK-Verbindung ergeben, mehrere zusammengehörige Ausgangskanäle von einem oder mehreren ausgangsseitigen Anschlüssen der TK-Einrichtung zuordnen zu können, müssen die von der TK-Einrichtung reservierten Ausgangskanäle entsprechend gekennzeichnet werden. Dazu weist die TK-Einrichtung gemäß einer bevorzugten Ausführungsform Mittel zum Zuordnen der Rufnummer des Anrufers zu den reservierten Ausgangskanälen und Mittel zum Feststellen, ob die Rufnummer des Anrufers gleich einer Rufnummer ist, die einem der reservierten Ausgangskanäle zugeordnet ist, auf.

Gemäß einer vorteilhaften Weiterbildung der vorliegenden Erfindung wird vorgeschlagen, daß die TK-Einrichtung nach dem Integrated Services Digital Network (ISDN)-Standard arbeitet. Ein ankommender Sammelanruf einer zweikanaligen TK-Verbindung kommt bspw. auf einem von 30 B-Kanälen eines eingangsseitigen S2M-Anschlusses der TK-Einrichtung an. Der Sammelanruf wird dann auf einen von zwei zusammengehörigen B-Kanälen eines ausgangsseitigen S0-Anschlusses geschaltet. Ein ankommender Sammelanruf einer sechskanaligen TK-Verbindung kommt bspw. auf einem von 30 B-Kanälen eines eingangsseitigen S2M-Anschlusses der TK-Einrichtung an. Der Sammelanruf wird dann auf einen von sechs zusammengehörigen B-Kanälen eines aus drei S0-Anschlüssen bestehenden ausgangsseitigen Gruppenanschlusses geschaltet.

Vorteilhafterweise sind die ausgangsseitigen Anschlüsse des Sammelanschlusses der TK-Einrichtung als S0-Anschlüsse ausgebildet, die jeweils zwei zusammengehörige Ausgangskanäle aufweisen. Mehrere S0-Anschlüsse können zu einem ausgangsseitigen Gruppenanschluß zusammengefaßt sein.

Vorzugsweise ist der ankommende Sammelanruf, der Teil einer TK-Verbindung ist, die mehrere Eingangskanäle der TK-Einrichtung belegt, als ein Video-Sammelanruf ausgebildet; es kann aber auch ein Datendienst mit höherer Kapazität n x 2B sein.

Ein bevorzugtes Ausführungsbeispiel der vorliegenden Erfindung wird im Folgenden anhand der Zeichnungen näher erläutert. Es zeigen:
- Fig. 1: eine erfindungsgemäße Telekommunikations (TK)-Einrichtung gemäß einer bevorzugten Ausführungsform; und
- Fig. 2: ein Ablaufdiagramm des erfindungsgemäßen Verfahrens gemäß einer bevorzugten Ausführungsform.

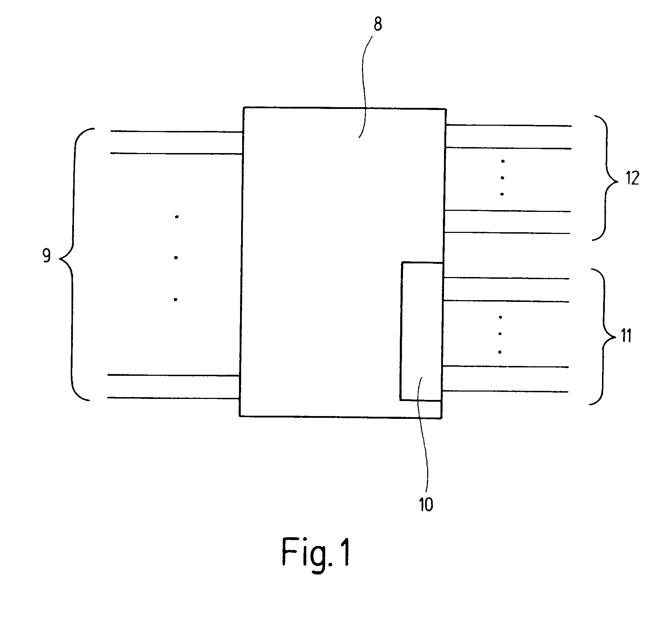

In Fig. 1 ist eine erfindungsgemäße Telekommunikations (TK)-Einrichtung in ihrer Gesamtheit mit dem Bezugszeichen 8 gekennzeichnet. Die TK-Einrichtung 8 arbeitet nach dem Integrated Services Digital Network (ISDN)-Standard. Sie weist mehrere eingangsseitige Anschlüsse 9 mit jeweils mehreren Eingangskanälen auf. Die eingangsseitigen Anschlüsse 9 sind als S2M-Anschlüsse ausgebildet, die eine Übertragungskapazität von 2,048 MBit/s aufweisen und über 15 ISDN-Verbindungsleitungen mit insgesamt 30 Eingangskanälen je Anschluß 9 verfügen. Ausgangsseitig weist die TK-Einrichtung 8 mindestens einen Sammelanschluß 10 auf. Der Sammelanschluß 10 weist mehrere ausgangsseitige Anschlüsse 11 mit jeweils mehreren Ausgangskanälen auf. Die ausgangsseitigen Anschlüsse 11 sind als sog. S0-Anschlüsse ausgebildet, die zwei Ausgangskanäle (zwei B-Kanäle einer ISDN-Verbindung) je Anschluß 11 aufweisen. Es sind auch ausgangsseitige Anschlüsse der Sammelanschlüsse denkbar, bei denen jeweils mehrere S0-Anschlüsse zu Gruppenanschlüssen mit jeweils mehreren S0-Anschlüssen zusammengefaßt sind. Die TK-Einrichtung 8 weist außerdem mehrere herkömmliche Einzelanschlüsse 12 für jeweils einen Telefonkanal auf.

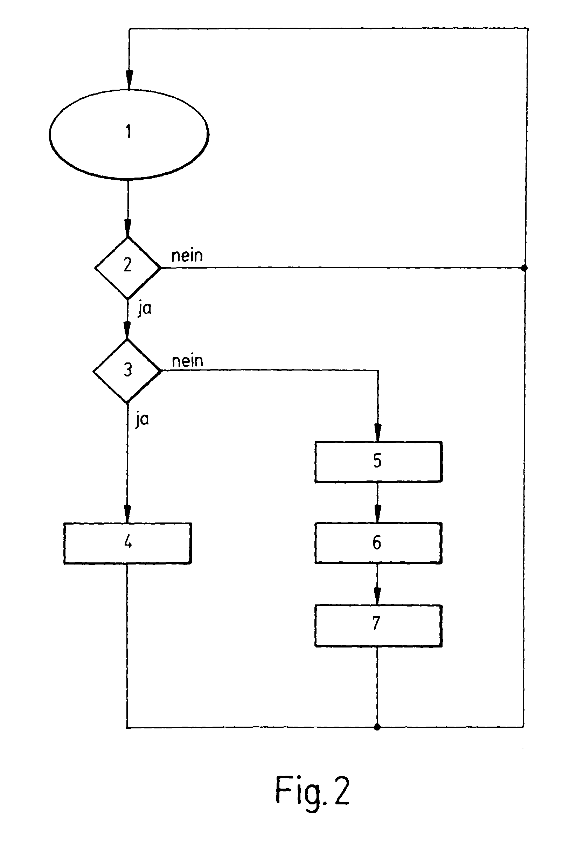

In Fig. 2 ist ein erfindungsgemäßes Verfahren gemäß einer bevorzugten Ausführungsform dargestellt. Das Verfahren dient dazu, einen Sammelanruf, der an der TK-Einrichtung 8 eingeht, abzuwickeln. Mit Hilfe des erfindungsgemäßen Verfahrens können erstmals Sammelanrufe abgewickelt werden, die Teil einer mehrkanaligen TK-Verbindung sind. Die TK-Einrichtung 8 erkennt, ob es sich bei einem ankommenden Anruf um einen Sammelanruf oder um einen Einzelanruf handelt, wenn beide Arten in einem Sammelanschluss geführt werden. Abhängig von der Art des ankommenden Anrufs leitet die TK-Einrichtung 8 einen Sammelanruf auf den Sammelanschluß 10 und einen Einzelanruf auf einen der Einzelanschlüsse 12 weiter. Anhand der Fig. 2 wird das erfindungsgemäße Verfahren beispielhaft für das Abwickeln von Sammelanrufen erläutert, die Teil einer TK-Verbindung sind, die zwei Eingangskanäle belegen (z. B. eine Video-TK-Verbindung).

Das Verfahren fängt damit an, daß in Schritt 1 der Sammelanruf auf einem Eingangskanal eines eingangsseitigen Anschlusses 9 der TK-Einrichtung 8 ankommt und an den Sammelanschluß 10 weitergeleitet wird.

In einem nachfolgenden Schritt 2 wird festgestellt, ob der ankommende Sammelanruf 1 Teil einer Telekommunikations (TK)-Verbindung ist, die zwei Eingangskanäle der TK-Einrichtung 8 belegt. Für eine zweikanalige TK-Verbindung über das ISDN werden zwei Anrufe kurz nacheinander aufgebaut und dann zu der zweikanaligen TK-Verbindung zusammengefaßt. Falls auf einem Eingangskanal der TK-Einrichtung 8 ein Sammelanruf 1 ankommt, erkennt die TK-Einrichtung 8, ob dies einer von zwei Sammelanrufen 1 einer zweikanaligen TK-Verbindung ist oder nicht.

Falls es sich bei dem ankommenden Sammelanruf 1 nicht um einen Sammelanruf 1 der zweikanaligen TK-Verbindung handelt, es sich also bspw. um eine herkömmliche Sprach-TK-Verbindung oder Telefax-TK-Verbindung handelt, wird der ankommende Sammelanruf 1, wie aus dem Stand der Technik bekannt, auf herkömmliche Weise abgewickelt. Das Verfahren kehrt dann wieder zu Schritt 1 zurück und ist bereit, einen neuen Sammelanruf 1 abzuwickeln.

Ist der ankommende Sammelanruf 1 dagegen Teil der zweikanaligen TK-Verbindung, wird zu einem nachfolgenden Schritt 3 verzweigt. Dort wird, allgemein gesagt, festgestellt, ob bereits ein anderer Sammelanruf von demselben Anrufer auf einen Ausgangskanal eines ausgangsseitigen Anschlusses 11 des Sammelanschlusses 10 der TK-Einrichtung 8 geschaltet ist. Genauer gesagt, wird in Schritt 3 festgestellt, ob die Rufnummer des Anrufers gleich einer Rufnummer ist, die einem reservierten Ausgangskanal zugeordnet wurde (vgl. Schritt 7). Als ein reservierter Ausgangskanal wird einer von zwei zusammengehörigen Ausgangskanälen bezeichnet, der in einem vorangegangenen Verfahrensdurchlauf in Schritt 6 reserviert worden ist. Beim ISDN bilden jeweils zwei zusammengehörige B-Kanäle einen ausgangsseitigen Anschluß 11.

Falls die Rufnummer des Anrufers nicht gleich einer Rufnummer ist, die einem reservierten Ausgangskanal zugeordnet ist, d. h. falls der ankommende Anruf der erste der beiden Sammelanrufe 1 der zweikanaligen TK-Verbindung ist, wird zu den Schritten 5 bis 7 verzweigt. In Schritt 5 wird der ankommende Sammelanruf 1 auf einen von zwei zusammengehörigen freien Ausgangskanälen der TK-Einrichtung 8 geschaltet. In Schritt 6 wird der andere der zwei zusammengehörigen Ausgangskanäle für einen erwarteten, später ankommenden zweiten Sammelanruf reserviert. In Schritt 7 wird dem reservierten Ausgangskanal die Rufnummer des Anrufers zugeordnet. Über die zugeordnete Rufnummer kann der später ankommende zweite Sammelanruf 1 dem reservierten Ausgangskanal problemlos zugeordnet werden.

Wenn der ankommende Sammelanruf 1 dagegen der zweite Sammelanruf 1 der zweikanaligen TK-Verbindung ist, ist die Rufnummer des Anrufers des ankommenden Sammelanrufs 1 gleich der Rufnummer, die einem reservierten Ausgangskanal zugeordnet ist. Falls das der Fall ist, wird in Schritt 4 der ankommende Sammelanruf 1 auf den in Schritt 6 reservierten Ausgangskanal geschaltet, dem die Rufnummer des Anrufers zugeordnet ist. Dadurch wird sichergestellt, daß die zwei Sammelanrufe 1 der zweikanaligen TK-Verbindung auf zwei zusammengehörige Ausgangskanäle eines ausgangsseitigen Anschlusses 11 des Sammelanschlusses 10 geschaltet werden.

Mit dem erfindungsgemäßen Verfahren können erstmals auch Video-Sammelanrufe und andere Sammelanrufe, die mehrere Eingangskanäle der TK-Einrichtung 8 belegen, die dann zu einer TK-Verbindung mit einer höheren Übertragungskapazität zusammengefaßt werden, ordnungsgemäß abgewickelt werden. Dadurch können nun erstmals auch mehrkanalige TK-Verbindungen zwischen dem Endgerät eines Anrufenden und einem an einen ausgangsseitigen Anschluß 11 eines Sammelanschlusses 10 einer TK-Einrichtung 8 angeschlossenen Endgerät hergestellt werden.

## Patentansprüche

1. Verfahren zum Abwickeln eines Sammelanrufs (1), der auf einem Eingangskanal eines eingangsseitigen Anschlusses (9) einer Telekommunikations (TK)-Einrichtung (8) mit mindestens einem Sammelanschluß (10) ankommt,
**gekennzeichnet durch** die nachfolgenden Schritte:
1.1. Feststellen (2) durch die TK-Einrichtung (8), ob der ankommende Sammelanruf (1) Teil einer Telekommunikations (TK)-Verbindung ist, die mehrere Eingangskanäle der TK-Einrichtung (8) belegt;
1.2. falls 1.1. zutrifft, Feststellen durch die TK-Einrichtung (8), ob bereits ein anderer Sammelanruf von demselben Anrufer auf einen Ausgangskanal der TK-Einrichtung (8) geschaltet ist;
1.3. falls 1.1. zutrifft und 1.2. nicht zutrifft, Schalten (5) des Sammelanrufs (1) auf einen von mehreren zusammengehörigen freien Ausgangskanälen der TK-Einrichtung (8) und Reservieren (6) der übrigen zusammengehörigen Ausgangskanäle durch die TK-Einrichtung (8); und
1.4. falls 1.2. zutrifft, Schalten (4) des ankommenden Sammelanrufs (1) auf einen der reservierten Ausgangskanäle durch die TK-Einrichtung (8).

2. Verfahren nach Anspruch 1, dadurch gekennzeichnet, daß in dem Schritt 1.3. den reservierten Ausgangskanälen die Rufnummer des Anrufers zugeordnet wird (7) und daß in dem Schritt 1.2. festgestellt wird, ob die Rufnummer des Anrufers gleich der Rufnummer ist, die einem der reservierten Ausgangskanäle zugeordnet ist (3).

3. Telekommunikations (TK)-Einrichtung (8) mit mindestens einem Sammelanschluß (10), zum Abwickeln eines Sammelanrufs (1), der auf einem Eingangskanal eines eingangsseitigen Anschlusses (9) der TK-Einrichtung (8) ankommt, **dadurch gekennzeichnet durch**, daß die TK-Einrichtung (8) aufweist:
3.1. Mittel zum Feststellen (2), ob der ankommende Sammelanruf (1) Teil einer Telekommunikations (TK)-Verbindung ist, die mehrere Eingangskanäle der TK-Einrichtung (8) belegt;
3.2. Mittel zum Feststellen, ob bereits ein anderer Sammelanruf von demselben Anrufer auf einen Ausgangskanal der TK-Einrichtung (8) geschaltet ist, falls 3.1. zutrifft;
3.3. Mittel zum Schalten (5) des Sammelanrufs (1) auf einen von mehreren zusammengehörigen freien Ausgangskanälen der TK-Einrichtung (8) und Reservieren (6) der übrigen zusammengehörigen Ausgangskanäle, falls 3.1. zutrifft und 3.2. nicht zutrifft;
3.4. Mittel zum Schalten (4) des ankommenden Sammelanrufs (1) auf einen der reservierten Ausgangskanäle, falls 3.2. zutrifft.

4. TK-Einrichtung (8) nach Anspruch 3, dadurch gekennzeichnet, daß die TK-Einrichtung (8) Mittel zum Zuordnen (7) der Rufnummer des Anrufers zu den reservierten Ausgangskanälen und Mittel zum Feststellen (3), ob die Rufnummer des Anrufers gleich einer Rufnummer ist, die einem der reservierten Ausgangskanäle zugeordnet ist, aufweist.

5. TK-Einrichtung (8) nach Anspruch 3 oder 4, dadurch gekennzeichnet, daß die TK-Einrichtung (8) nach dem Integrated Services Digital Network (ISDN)-Standard arbeitet.

6. TK-Einrichtung (8) nach Anspruch 5, dadurch gekennzeichnet, daß die ausgangsseitigen Anschlüsse (11) des Sammelanschlusses (10) der TK-Einrichtung (8) als S0-Anschlüsse ausgebildet sind, die jeweils zwei zusammengehörige Ausgangskanäle aufweisen.

7. TK-Einrichtung (8) nach einem der Ansprüche 3 bis 6, dadurch gekennzeichnet, daß der ankommende Sammelanruf (1), der Teil einer Telekommunikations (TK)-Verbindung ist, die mehrere Eingangskanäle der TK-Einrichtung (8) belegt, als ein Video-Sammelanruf ausgebildet ist.
